# FASCICULE DE BREVET EUROPEEN

(11) **EP 0 469 954 B1**
(45) Date de publication et mention de la délivrance du brevet: **25.09.1996**
(21) Numéro de dépôt: 91402020.1
(22) Date de dépôt: 19.07.1991
(51) Int. Cl.: C08F 2/38

(54) **Procédé de préparation de dispersions aqueuses de copolymères**
Verfahren zur Herstellung von wässrigen Dispersionen von Copolymeren
Process for preparing aqueous dispersion of copolymers

(30) Priorité: 01.08.1990 FR 9009816
(43) Date de publication de la demande: 05.02.1992
(73) Titulaire: RHONE-POULENC CHIMIE, 92408 Courbevoie Cédex (FR)
(72) Inventeur: Charmot, Dominique, F-75019 Paris (FR); Oger, Nicole, F-92000 Nanterre (FR)
(74) Mandataire: Seugnet, Jean Louis

(56) Documents cités:
- GB-A- 827 320

## Description

La présente invention concerne un procédé de préparation de dispersions aqueuses de-copolymères par polymérisation en émulsion de monomères éthyléniquement insaturés en présence d'un agent de transfert de chaînes organosulfuré.

Les dispersions aqueuses de copolyméres et terpolymères telles que les latex styrène-butadiène, styrène-acrylates, styrène-acrylonitrile, acrylonitrile-butadiène-styrène sont largement utilisées dans des applications variées incluant les compositions de revêtement, les compositions adhésives et d'imprégnation.

Pour limiter le poids moléculaire et/ou le degré de réticulation du copolymère formé, qui ont des influences profondes sur les propretés d'usage des latex, il est usuel d'employer un agent de transfert de chaîne qui agit au cours du processus de polymérisation. Les agents de transfert couramment utilisés industriellement comprennent les mercaptans aliphatiques et les hydrocarbures halogénés . Ces deux types de régulateurs présentent des inconvénients - Les dispersions qui ont été obtenues en présence d'un mercaptan, bien qu'ayant une teneur résiduelle en mercaptan très faible, présentent une odeur caractéristique indésirable. Si l'on utilise des composés organohalogénés, comme le tetrachlorure de carbone, le bromoforme ou le bromotrichlorométhane, les teneurs résiduelles sont relativement élevées. L'odeur liée aux mercaptans, ou la présence de composés halogénés résiduels constituent une sérieuse limitation à l'emploi des dispersions dans certaines applications, par exemple comme liant dans les formulations adhésives ou de revêtement, et en particulier dans les formulations adaptées au couchage de papier. Ces inconvénients peuvent être éliminés soit par traitement du latex avec un agent qui convertit le thiol en un produit inodore (par exemple (US-A-3 756 976) soit par un procédé de dévolatilisation dans le cas des organohalogénés. Cependant ces procédés sont onéreux et de mise en oeuvre délicate.

D'autres bisulfures organiques appartenant aux classes des diaryldisulfures, des alkylthiurames disulfures, des disulfures de xanthogène sont connus de manière générale comme agents régulateurs de poids moléculaire pour la polymérisation de monomères insaturés incluant le styrène et le butadiène.

Toutefois les composés plus spécifiquement cités, le disulfure de diphényle, le disulfure de tetraméthylthiurame et le disulfure de diéthylxanthogène présentent tous des inconvénients. Le disulfure de diphényle est insuffisamment efficace, le thiurame a une action retardatrice, voire inhibitrice de la polymérisation et les xanthogènes ont une odeur prononcée.
Les disulfures de diphényl substitués par des groupes amines, ont encore été décrits comme agents de transfert dans la polymérisation et la copolymérisation du styrène (FR-A-2 321 519) ; ces dérivés présentent encore l'inconvénient d'être des retardateurs de polymérisation.

La présente invention a pour but de rémedier aux inconvénients de l'art antérieur en proposant un procédé de polymérisation efficace, résultant en une bonne conversion des monomères, qui conduit à des latex de copolymères ne présentant pas ou peu d'odeur indésirable ni de composés résiduels halogénés sans nécessiter un traitement de post-polymérisation ou élimination de l'agent de transfert résiduel.

Selon l'invention le procédé de production de dispersions aqueuses de copolymères consistant à polymériser un mélange de monomères contenant au moins 60 % en poids de styrène et/ou de butadiène et/ou d'ester acryliques et/ou de nitrile vinylique avec éventuellement jusqu'à 40 % en poids d'un ou plusieurs autres monomères insaturés copolymérisables, en émulsion aqueuse en présence d'un agent de transfert de chaînes est caractérisé en ce que l'agent de transfert est choisi parmi les disulfures de diphényle substitué de formule (I). 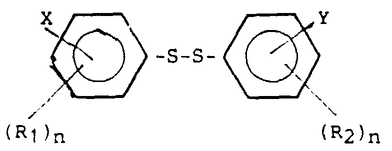 dans laquelle X, Y indépendamment l'un de l'autre représente un groupe -ZR₃ où Z est -O-, 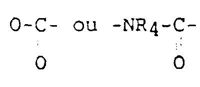 et R₃ est est un radical alkyle linéaire ou ramifié, aryle, aralkyle ou cycloaliphatique
R₁, R₂ identiques ou différents représentent un radical alkyle linéaire ou ramifié en C₁-C₁₂, R₄ est un atome d'hydrogène ou un radical alkyl en C₁-C₄ et n est un nombre entier compris entre 0 et 4.

Les radicaux représentés par R₃ peuvent être plus particulièrement des radicaux alkyle ayant de 1 à 12 atomes de carbone, de préférence de 1 à 6 atomes de carbone, des radicaux aryle, aralkyle ou cycloaliphatiques en C₆-C₁₆ pouvant être substitués par un ou plusieurs radicaux alkyle ou alkoxy linéaire ou ramifié ayant de 1 à 4 atomes de carbone, tels que les radicaux phényle, benzyle, benzyhydryle, naphtyle, phénétyle, phénylpropyle, méthoxyphényle, éthoxyphényle, butoxyphényle, cyclohexyle.

Les substituants représentés par X et Y peuvent être par exemple des radicaux méthoxy-, éthoxy-, isopropoxy-, hexyloxy-, phénoxy-, benzyloxy, naphtyloxy-, acetoxy-, propionyloxy-, benzoyloxy-, naptoyloxy-, acétamido-, propanamido-, pentanamido-, heptanamido-, dodecanamido-, benzamido benzèneacetamido-, benzènepropanamido-, methylacetamido-, diméthylacétamido-, méthoxybenzamido-.

Il est souhaitable que les substituants X et Y soient positionnés en ortho ou para sur le noyau aromatique.

A titre d'exemples de composés répondant à la formule (I) on peut citer : - les disulfures de bis (alcoxyphényl) et bis (aryloxyphényl) tels que les bis (méthoxy- phényl) disulfures comme le bis (2-méthoxyphényl) disulfure, le bis (3-méthoxyphényl) disulfure, le bis (4-méthoxyphényl) disulfure ; les bis (éthoxyphényl) disulfures ; les bis (isopropoxyphényl) disulfures; les bis (hexyloxyphényl) disulfures ; les bis (phénoxyphényl) disulfures ; les bis (benzyloxyphényl) disulfures; les bis (napthyloxy) phényl disulfures ;
- les disulfures de bis (acyloxyphényl) comme les bis (acétoxyphényl) disulfures ; les bis (propionyloxyphényl) disulfures ; les bis (benzoyloxyphényl disulfures; les bis (naphtoyloxyphényl) disulfures;
- les disulfures de bis (acylaminophényl) comme le bis (2-acétamidophényl) disulfure, et le bis (4-acétamidophényl) disulfure, le bis (2,5 diméthyl4-acétamidophényl) disulfure, le bis (3-méthyl,4 acétamidophényl) disulfure, le bis (4-propanamidophényl) disulfure, le bis (4-hexanamidophényl) disulfure, le bis (4-dodécamidophényl) disulfure, le bis (4-isobutyramido-phényl) disulfure, le bis (2-benzamidophényl) disulfure, le bis (4-benzamidophényl) disulfure, le bis (2-benzène acétamidophényl) disulfure, le bis (4-benzèneacétamidophényl) disulfure, le bis (4-benzènepropanamidophényl) disulfure, le bis (2-benzamido-4-méthoxyphényl) disulfure.

Il est bien entendu que l'on peut utiliser un mélange des disulfures de formule (I). Ces disulfures sont disponibles commercialement ou peuvent être préparés par toute méthode connue par exemple par couplage oxydatif du monothiol substitué correspondant, par sulfuration du phényl substitué ou par acylation, esterification ou étherification du disulfure de di(aminophényle) ou du disulfure de di-(hydroxyphényle) correspondant.

Les monomères polymérisables sont constitués de au moins 60 % en poids de deux ou plusieurs monomères choisis parmi le styrène, le butadiène, les esters acryliques et les nitriles vinyliques. Par esters acryliques on désigne les esters de l'acide acrylique et de l'acide méthacrylique avec les alcanols en C₁-C₁₂, de préférence C₁-C₈, tels que l'acrylate de méthyle, l'acrylate d'éthyle, l'acrylate de propyle, l'acrylate de n-butyle, l'acrylate d'isobutyle, l'acrylate de 2-éthylhexyle, le méthacrylate de méthyle, le méthacrylate d'éthyle, le méthacrylate de n-butyle, le méthacrylate d'isobutyle..... Les nitriles vinyliques incluent ceux ayant de 3 à 12 atomes de carbone, en particulier l'acrylonitrile et le méthacrylonitrile.

Le styrène peut-être remplacé en totalité ou en partie par l'αméthylstyrène ou le vinyltoluène.

Parmi les monomères éthyléniquement insaturés polymérisables avec les monomères ci-dessus, et dont la quantité peut aller jusqu'à 40 % en poids du total des monomères on peut citer :
- les esters vinyliques d'acide carboxylique comme l'acétate de vinyle, le versatate de vinyle, le propionate de vinyle,
- les acides mono-et-di carboxyliques insaturés éthyléniques comme l'acide acrylique, l'acide méthacrylique, l'acide itaconique, l'acide maléique, l'acide fumarique et les mono-alkylesters des acides dicarboxyliques du type cité avec les alcanols ayant de préférence 1 à 4 atomes de carbone et leur dérivés N-substitués.
- les amides des acides carboxyliques insaturés comme l'acrylamide, le méthacrylamide, le N-méthylolacrylamide ou -méthacrylamide.
- les monomères éthyléniques comportant un groupe acide sulfonique et ses sels alcalins ou d'ammonium par exemple l'acide vinysulfonique, l'acide vinylbenzène sulfonique, l'acide α-acrylamido méthylpropane-sulfonique, le 2-sulfoéthylèneméthacrylate.
- les monomères éthyléniques insaturés comportant un groupe amino secondaire, tertiaire ou quaternaire ou un groupe hétérocyclique contenant de l'azote par exemple les vinylpyridines, le vinylimidazole, les (meth)acrylates d'aminoalkyle et les (meth)acrylamides d'aminoalkyle comme le diméthylaminoéthylacrylate ou -méthacrylate, le ditertiobutylaminoéthylacrylate ou -méthacrylate, le diméthyl amino méthylacrylamide ou -méthacrylamide.... de même que les monomères zwitterioniques comme l'acrylate de sulfopropyl (diméthyl) aminopropyle...
- les esters des acides (meth) acryliques avec des alcanediols contenant de préférence 2-8 atomes de carbone tels que le mono (meth) acrylate de glycol, le mono(meth)acrylate d'hydroxypropyle, le mono (meth) acrylate de 1-4 butanediol ainsi que les monomères comportant deux doubles liasons polymérisables comme le diméthacrylate d'éthylène-glycol.

En plus des monomères cités, on peut encore mettre en oeuvre, en quantités mineures, comprises généralement entre 0,1 et 5 % des monomères éthylèniques insaturés ayant un caractère réticulable tels que le (meth) acrylate de glycidyle ou les silanes vinyliques et acryliques.

A titre d'exemple de compositions pour la production de latex liants on peut citer les compositions contenant en poids 25-90 % de préférence 45-75 % de styrène et/ou acrylonitrile, 75-10 % de préférence 55-25 % de butadiène et/ou acrylates, 0-20 % de préférence 1-10 % d'acide carboxylique insaturé, 0-40 % de préférence 0-15 % d'autres monomères éthyléniques insaturés.

La polymérisation est réalisée de manière connue en soi en émulsion aqueuse des monomères polymérisables en présence d'au moins un initiateur radicalaire et de l'agent de transfert - avec une concentration en monomères dans le milieu réactionnel comprise généralement entre 20 et 60 % en poids.

Tout type d'initiateur ou amorçeur à radicaux libres habituels dans la polymérisation en émulsion peut convenir. Des exemples d'initiateurs comprennent les hydroperoxydes tels que l'eau oxygénée, l'hydroperoxyde de diisopropylbenzène, les persulfates de sodium, de potassium ou d'ammonium, et les initiateurs cationiques comme l'azobis (isobutyronitrile) le 4-4'azobis (acide 4-cyano valérique).
Ces initiateurs peuvent être associés à un réducteur comme par exemple le bisulfite. La quantité se situe en général entre 0,05 et 2 % en poids par rapport à la quantité des monomères.

La quantité de disulfure de diphényle substitué est comprise entre 0,1 et 10 %, de préférence entre 0,5 et 5 % en poids par rapport au poids total des monomères, suivant le poids moléculaire et le degré de réticulation souhaité pour le polymère. Il peut être introduit dans le milieu réactionnel soit en totalité au début de la réaction, soit en continu en solution dans les monomères principaux, soit encore en partie initialement et en partie en continu. Lorsque la solubilité du produit dans les monomères est faible, il peut être introduit sous forme d'une suspension simultanément avec les monomères.

L'emploi simultané d'un agent de transfert connu tel que par exemple un mercaptan, avec le disulfure de diphényle selon l'invention est possible pour autant qu'il n'en résulte pas une odeur indésirable.

La température de polymérisation, fonction de l'initiateur mis en oeuvre, est généralement comprise entre 50° C et 100° C, de préference entre 70 et 90° C. La stabilisation des particules est assurée, si nécessaire, par tout système de stabilisation colloïdale connu comme les émulsifiants anioniques, cationiques, amphotères et non-ioniques. Les émulsifiants anioniques sont par exemple les alkylsulfates, les alkylsulfonates, les alkylarylsulfonates et les alkylphosphates alcalins; les dialkylsulfosuccinates ; les sels de sodium, potassium ou ammonium des acides gras saturés ou non. Des exemples d'émulsifiants cationiques sont les sels d'alkylpyridinium ou d'alkylammonium comme le chlorure ou le bromure de N-éthyl dodecylammonium, le chlorure ou le bromure de cetylammonium. Comme émulsifiants non-ioniques on cite en particulier les dérivés polyoxyéthylènés et/ou polyoxypropylénés des alcools gras, des acides gras ou des alkylphénols.

La polymérisation peut être réalisée en continu, en discontinu ou semi-continu avec introduction d'une partie des monomères en continu et être du type "ensemencé" ou "incremental" selon toute variante connue pour l'obtention des particules de structure homogène et hétérogène.

Les dispersions aqueuses de copolymères inodores et les copolymères qui peuvent être récupérés de la dispersion par tout moyen connu dans la technique se caractérisent en ce que le copolymère contient des groupes phénylsulfure substitué par un radical -ZR₃ ayant la définition donnée dans la formule (I).

Les dispersions aqueuses peuvent être avantageusement utilisées comme liants dans les compositions de revêtement pour le couchage du papier.

Elles sont également intéressantes comme liants dans l'industrie textile en particulier pour la fabrication de non-tissés, comme additif dans les peintures et les formulations adhésives.

Les exemples qui suivent, dans lesquels les parties et les pourcentages sont indiqués en poids, illustrent l'invention.

### EXEMPLE 1

### Préparation de l'agent de transfert

Le disulfure de bis (2-acétamidophényl) est synthétisé selon la méthode décrite dans le brevet FR-A- 1061103, par acylation du 2-aminothiophénol par l'anhydride acétique entre 0° C et 5°C puis oxydation à l'air du produit obtenu dissous dans une solution molaire de carbonate de sodium.
Point de fusion : 156° C.

### Polymérisation

Dans un réacteur de polymérisation, on charge :

| | **Parties** |
|---|---|
| Butadiène | 3,8 |
| Styrène | 6,2 |
| Acide itaconique | 1 |
| Dodécylphényloxybenzène disulfonate de sodium (DOWFAX 2A1®) | 0,3 |
| Persulfate d'ammoniun | 0,5 |
| Laurylsulfate de sodium | 0,5 |
| Eau | 60 |

On chauffe le mélange à 75° C sous atmosphère azote et on introduit en continu pendant 10 heures :

| | **Parties** |
|---|---|
| Butadiène | 34,7 |
| Styrène | 55,3 |
| Acide acrylique | 1 |
| Dodécylphényloxybenzène disulfonate de sodium (DOWFAX 2A1®) | 1,7 |
| Persulfate d'ammoniun | 0,5 |
| Disulfure de bis (2-acétamidophényl) | 2 |
| Eau | 37 |

Après la fin de l'addition, on porte la température à 80° C pendant une période de 30 minutes puis on laisse refroidir jusqu'à la température ambiante.

### Exemples 2 à 4

L'agent de transfert utilisé est le disulfure de bis (2-benzamidophényl). Il est préparé par acylation du 2-aminothiophénol à l'aide de chlorure de benzoyle à 10° C en présence d'hydroxyde de sodium puis oxy dation par un courant d'air et recristallisation dans l'alcool.
Point de fusion : 139-140° C.

La polymérisation est réalisée de la manière décrite à l'exemple 1 à l'exception qu'une partie du disulfure est introduite initialement et la partie restante est introduite en continu pendant les 10 heures de chauffage dans les quantités suivantes :

| Exemple | 2 | 3 | 4 |
|---|---|---|---|
| **Parties en poids** | | | |
| initialement | 1 | 1 | 1 |
| en continu | 2 | 1 | 3 |

### Exemple 5

On réalise une polymérisation selon l'exemple 1 en utilisant 2 parties de disulfure de bis (3-tertiobutyl 2-méthoxy 5-méthylphényl). Le disulfure est synthétisé par méthylation du 2-tertiobutylparacrésol à 120° C dans une solution hydrométhanolique alcaline à l'aide de chlorure de méthyle, suivi de la sulfuration en milieu toluène de l'éther méthylique de 2-tertiobutyl paracrésol par le monochlorure de soufre en excès stoechiométrique. Le produit obtenu est recristallisé dans le méthanol.

### Exemple 6

On charge dans un réacteur de polymérisation :

| | **Parties** |
|---|---|
| Butadiène | 2,7 |
| Styrène | 7,3 |
| Acide itaconique | 1 |
| Dodécylphényloxybenzène disulfonate de sodium (DOWFAX2A1®) | 0,3 |
| Persulfate d'ammoniun | 0,5 |
| Laurylsulfate de sodium | 0,5 |
| Disulfure de bis (2-benzamidophényl) | 1,5 |
| Eau | 60 |

On chauffe le mélange à 75° C sous atmosphère azote et on introduit en continu pendant 10 heures :

| | **Parties** |
|---|---|
| Butadiène | 24,3 |
| Styrène | 65,7 |
| Acide acrylique | 1 |
| Dodécylphényloxybenzène disulfonate de sodium (DOWFAX2A1®) | 1,7 |
| Persulfate d'ammonium | 0,5 |
| Disulfure de bis (2-benzamidophényl) | 2 |
| Eau | 37 |

On porte ensuite le mélange réactionnel à 80° C pendant 30 minutes puis on laisse refroidir jusqu'à la température ambiante.

### Exemple 7

Une polymérisation est conduite suivant le mode opératoire de l'exemple 1 en utilisant les compositions suivantes :

### Mélange initial :

| | **Parties** |
|---|---|
| Butadiène | 3,7 |
| Styrène | 5 |
| Acrylonitrile | 1,3 |
| Acide itaconique | 1 |
| Dodécylphényloxybenzène disulfonate de sodium (DOWFAX2A1®) | 0,3 |
| Persulfate d'ammoniun | 0,5 |
| Laurylsulfate de sodium | 0,5 |
| Disulfure de bis (2-benzamidophényl) | 1,5 |
| Eau | 60 |

### Mélange ajouté en continu :

| | **Parties** |
|---|---|
| Butadiène | 33,3 |
| Styrène | 45 |
| Acrylonitrile | 11,7 |
| Acide acrylique | 1 |
| Dodécylphényloxybenzène disulfonate de sodium (DOWFAX2A1®) | 1,7 |
| Persulfate d'ammonium | 0,5 |
| Disulfure de bis (benzamidophényl) | 2 |
| Eau | 37 |

### Exemple 8

On réalise une polymérisation selon l'exemple 7 en remplaçant l'acrylonitrile par la même quantité de méthacrylate de méthyle.

### Exemple 9 (exemple comparatif)

On reproduit la polymérisation décrite dans l'exemple 6 en remplaçant le disulfure de bis (2-benzamidophényl) par du tertiododecylmercaptan (0,4 parties initialement puis 0,4 parties dans le mélange en continu).

### Exemple 10 à 12 (exemples comparatifs)

On réalise des polymérisations selon l'exemple 1 en remplaçant le disulfure de bis (acétamido phényl) par les agents modifiants suivants :

| **Exemple** | **Modifiant** | **Parties initialement** | **En continu** |
|---|---|---|---|
| 10 | t.dodécylmercaptan | 0,5 | 0,4 |
| 11 | Tetrachlorure de carbone | 3,25 | 0 |
| 12 | Disulfure de di(aminophényle) | 0 | 1,5 |

Le Tableau I indique, pour chaque exemple, la proportion de copolymère insoluble dans le chloroforme et le taux de monomères résiduels dans le latex.

Le taux de monomères résiduels dans le latex est mesuré par entraînement à la vapeur et recueil dans un appareil "dean stark". Il est exprimé en % en poids par rapport au poids de l'émulsion.

La proportion de copolymère insoluble dans le chloroforme est déterminée par la méthode suivante :

A partir du latex à examiner, on prépare sur une plaque de verre un film de 15/100 mm d'épaisseur. Un échantillon du film sec de poids Po est extrait par le chloroforme chauffé à reflux à l'aide d'un appareil Soxhlet, puis séché et pesé. Le taux de copolymère est donné par le rapport P (poids de l'échantillon après séchage) /Po exprimé en pourcentage.

A partir du latex obtenu selon les exemples de 1 à 12 on prépare des compositions aqueuses pour couchage de papier de composition suivante :

| | |
|---|---|
| Kaolin SPS | 100 parties |
| Hexamétaphosphate de sodium | 0,3 parties |
| Carboxylméthyl cellulose (basse viscosité) | 0,3 parties |
| Latex | 10 parties |

Chaque composition est ajustée à un pH de 8,5 par addition d'hydroxyde de sodium et à un taux de 50 % en poids de matières sèches par addition d'eau.

Un papier de type offset est couché à 15 g/m² de chacune des compositions à l'aide d'une coucheuse à lame d'air. Le papier couché est séché puis calandré dans les conditions standard, et conditionné à 23° C dans une atmosphère à 50 % d'humidité relative.

On détermine les propriétés du papier couché.
**Blancheur** : selon la norme TAPPI standard T-452 om 87 en utilisant un appareil ELREPHO 2000®.
**Résistance à l'arrachage sec et humide** : selon la norme TAPPI standard T-499 à l'aide de l'appareil IGT AIC2. Pour la détermination de la résistance à l'arrachage humide la bande d'essai est humidifiée préalablement à l'impression, on utilise une encre "3801" commercialisée par les Etablissements LORILLEUX et une vitesse de 1 m/sec. Pour la détermination de la résistance à l'arrachage sec on utilise une encre "3804".
**Porosité à l'encre** (aptitude à l'impression) : selon la norme TAPPI standard MC-19 avec une encre K&N. L'encre est établie sur le papier couché puis l'excès est essuyé après 2 minutes. On mesure la blancheur avant encrage et après encrage.

Le résultat est donné en % perte de blancheur.
**Odeur** : Les papiers couchés sont traités en étuve à 70°C pendant 2 heures et stockés dans 10 bocaux fermés de 1 litre. L'odeur globale du bocal après 2 à 3 insufflations est notée par un jury composé de 10 individus au moyen d'une échelle allant de 0 à 4 :
- 0 :: pas d'odeur perceptible
- 1 :: odeur à peine perceptible
- 2 :: faible odeur
- 3 :: odeur nette, très distincte
- 4 :: odeur forte.

Le résultat est la moyenne des notes.

Les caractéristiques du papier couché sont répertoriées dans le Tableau I.

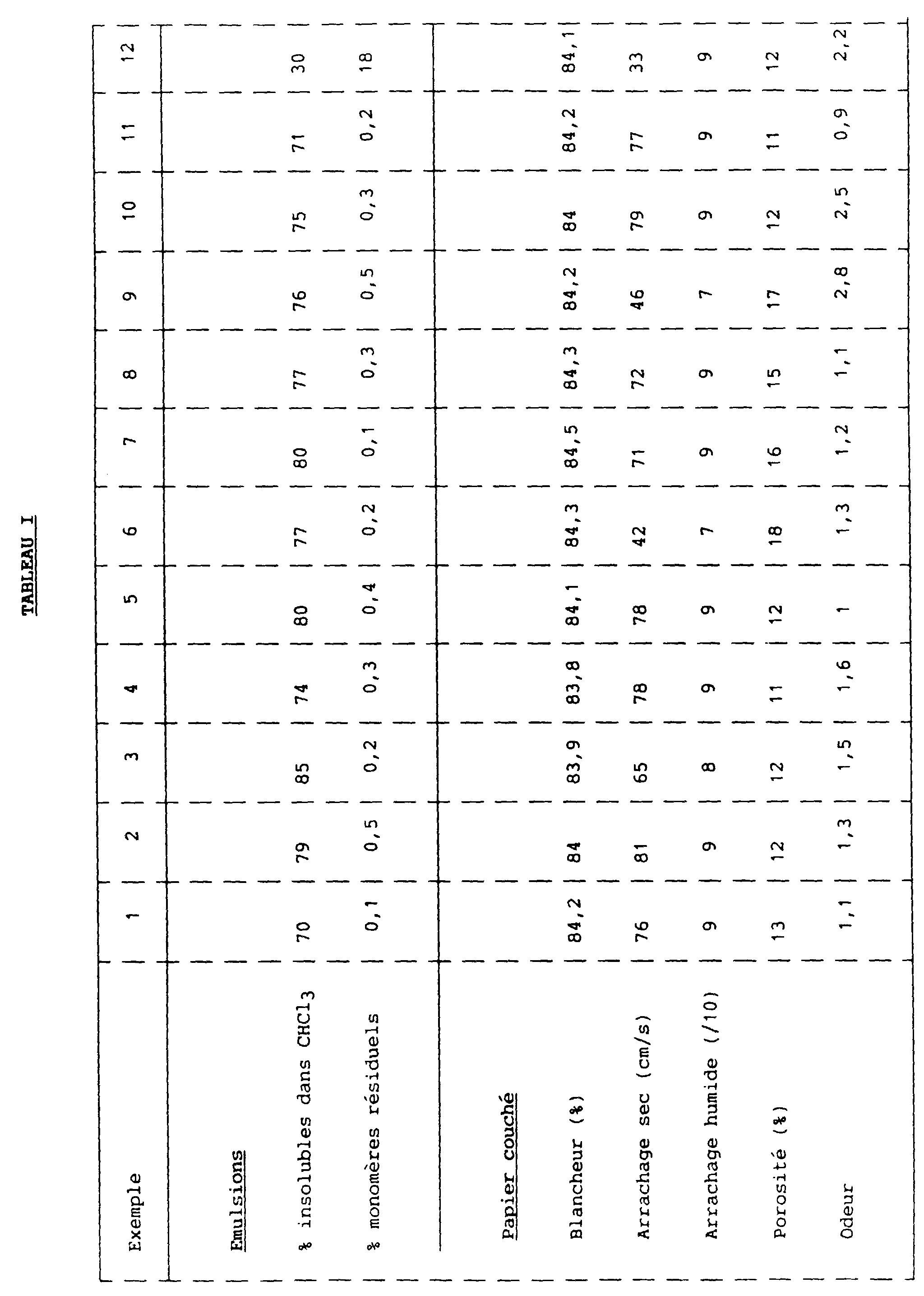

## Revendications

1. Procédé de production de dispersions aqueuses de copolymères consistant à polymériser un mélange de monomères contenant au moins 60 % en poids de styrène et/ou de butadiène et/ou d'ester acryliques et/ou de nitrile vinylique avec éventuellement jusqu'à 40 % en poids d'un ou plusieurs autres monomères insaturés copolymérisables, en émulsion aqueuse en présence d'un agent de transfert de chaînes caractérisé en ce que l'agent de transfert est choisi parmi les disulfures de diphényle substitué de formule (I). 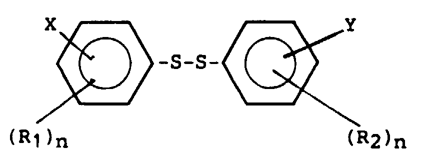 dans laquelle X, Y indépendamment l'un de l'autre représente un groupe -ZR₃ où Z est -O-, 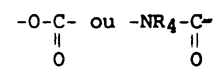 et R₃ est un radical alkyle linéaire ou ramifié, aryle, aralkyle ou cycloaliphatique
R₁, R₂ identiques ou différents représentent un radical alkyle linéaire ou ramifié en C₁-C₁₂, R₄ est un atome d'hydrogène ou un radical alkyl en C₁-C₄ et n est un nombre entier compris entre 0 et 4.

2. Procédé selon la revendication 1 caractérisé en ce que, dans la formule (I) R₃ est un radical alkyle en C₁-C₁₂, de préférence en C₁-C₆.

3. Procédé selon la revendication 1 caractérisé en ce que, dans la formule (I) R₃ est un radical aryle, aralkyle ou cycloalphatique en C₆-C₁₆ pouvant être substitué par un ou plusieurs radicaux alkyle ou alcoxy linéaire ou ramifié ayant de 1 à 4 atomes de carbone.

4. Procédé selon l'une des revendications 1 à 3 caractérisé en ce que la quantité de disulfure de diphényle est comprise entre 0,1 et 10 % en poids par rapport au poids total des monomères polymérisables.

5. Procédé selon l'une des revendications 1 à 4 caractérisé en ce que le mélange de monomères contient 25 à 90 % de styrène et/ou acrylonitrile, 10 à 75 % de butadiène et/ou esters acryliques, 0 à 20 % d'acide carboxylique insaturé, 0 à 40 % d'autres monomères éthyléniques insaturés.

6. Dispersions aqueuses de copolymères susceptibles d'être obtenues par le procédé selon l'une des revendications 1 à 5 caractérisées en ce que le copolymère contient des unités phénylsulfure substitué par un radical -ZR₃ ayant la définition donnée dans la revendication 1.

## Patentansprüche

1. Verfahren zur Herstellung wäßriger Copolymerendispersionen, das darin besteht eine Mischung von Monomeren, die mindestens 60 Gew.-% Styrol und/oder Butadien und/oder Acrylester und/oder Vinylnitril enthält mit gegebenenfalls bis zu 40 Gew.-% eines oder mehrerer anderer copolymerisierbarer ungesättigter Monomere in wäßriger Emulsion in Gegenwart eines Kettenübertragungsmittels zu polymerisieren, dadurch gekennzeichnet, daß das Übertragungsmittel ausgewählt ist aus substituierten Diphenyldisulfiden der Formel (I) 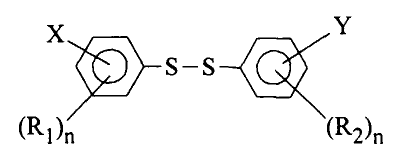 in der X und Y unabhängig voneinander eine Gruppe -ZR₃ darstellen, wobei Z -O-, 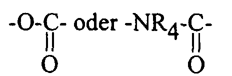 ist und R₃ einen linearen oder verzweigten Alkylrest, einen Arylrest, einen Aralkylrest oder einen cycloaliphatischen Rest darstellt;
R₁ und R₂, identisch oder verschieden, einen linearen oder verzweigten Alkylrest mit C₁-C₁₂ darstellen, R₄ ein Wasserstoffatom oder einen Alkylrest mit C₁-C₄ darstellt und n eine ganze Zahl zwischen 0 und 4 ist.

2. Verfahren nach Anspruch 1, dadurch gekennzeichnet, daß in der Formel (I) R₃ ein Alkylrest mit C₁-C₁₂, vorzugsweise mit C₁-C₆, ist.

3. Verfahren nach Anspruch 1, dadurch gekennzeichnet, daß in der Formel (I) R₃ einen Aryl-, Aralkyl- oder cycloaliphatischen Rest mit C₆-C₁₆ bezeichnet, der mit einem oder mehreren linearen oder verzweigten Alkyl- oder Alkoxyresten mit 1 bis 4 Kohlenstoffatomen substituiert sein kann.

4. Verfahren nach einem der Ansprüche 1 bis 3, dadurch gekennzeichnet, daß die Menge an Diphenyldisulfid 0,1 bis 10 Gew.-%, bezogen auf das Gesamtgewicht der polymerisierbaren Monomeren, beträgt.

5. Verfahren nach einem der Ansprüche 1 bis 4, dadurch gekennzeichnet, daß die Monomerenmischung 25 bis 90 % Styrol und/oder Acrylnitril, 10 bis 75 % Butadien und/oder Acrylester, 0 bis 20 % einer ungesättigten Carbonsäure und 0 bis 40 % weiterer ungesättigter ethylenischer Monomeren enthält.

6. Wäßrige Dispersionen von Copolymeren, erhältlich durch das Verfahren nach einem der Ansprüche 1 bis 5, dadurch gekennzeichnet, daß das Copolymer Phenylsulfideinheiten enthält, substituiert mit einem Rest -ZR₃ gemäß der in Anspruch 1 angegebenen Definition.

## Claims

1. A process for the production of aqueous dispersions of copolymers which comprises polymerising a mixture of monomers containing at least 60% by weight of styrene and/or butadiene and/or acrylic ester and/or vinyl nitrile with optionally up to 40% by weight of one or more other copolymerisable unsaturated monomers, in aqueous emulsion in the presence of a chain transfer agent, characterised in that the transfer agent is selected from substituted diphenyldisulphides of formula (I): 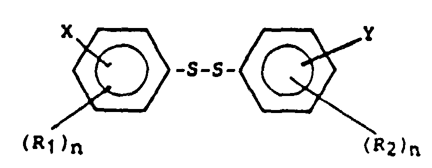 wherein X and Y independently of each other represents a group -ZR₃ in which Z is -O-, 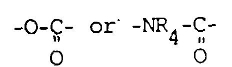 and R₃ is a straight or branched chain alkyl, aryl, aralkyl or cycloaliphatic radical, R₁ and R₂ which are identical or different represent a straight or branched chain C₁-C₁₂ alkyl radical, R₄ is a hydrogen atom or a C₁-C₄ alkyl radical, and n is an integer of between 0 and 4.

2. A process according to claim 1 characterised in that, in formula (I), R₃ is a C₁-C₁₂, preferably C₁-C₆ alkyl radical.

3. A process according to claim 1 characterised in that, in formula (I), R₃ is a C₆-C₁₆ cycloaliphatic, aryl or aralkyl radical which can be substituted by one or more straight or branched chain alkoxy or alkyl radicals having from 1 to 4 carbon atoms.

4. A process according to one of claims 1 to 3 characterised in that the amount of diphenyldisulphide is between 0.1 and 10% by weight with respect to the total weight of polymerisable monomers.

5. A process according to one of claims 1 to 4 characterised in that the mixture of monomers contains 25 to 90% of styrene and/or acrylonitrile, 10 to 75% of butadiene and/or acrylic esters, 0 to 20% of unsaturated carboxylic acid, and 0 to 40% of other unsaturated ethylenic monomers.

6. Aqueous dispersions of copolymers which can be obtained by the process according to one of claims 1 to 5 characterised in that the copolymer contains phenylsulphide units substituted by a radical -ZR₃ having the definition set forth in claim 1.
